**Europäisches Patentamt**

**European Patent Office**

**Office européen des brevets**

(19)

(11) Veröffentlichungsnummer: **0 206 067**
**A1**

(12) # EUROPÄISCHE PATENTANMELDUNG

(21) Anmeldenummer: **86107810.3**

(22) Anmeldetag: **07.06.86**

(51) Int. Cl.⁴: **B 01 J 35/02**

(30) Priorität: **20.06.85 DE 3522095**
**27.07.85 DE 8521746 U**

(43) Veröffentlichungstag der Anmeldung: **30.12.86**
**Patentblatt 86/52**

(84) Benannte Vertragsstaaten: **AT DE FR GB IT**

(71) Anmelder: **Stettner & Co., Hersbrucker Strasse 22,**
**D-8560 Lauf (DE)**

(72) Erfinder: **Winkler, Hans E., Eigenheimstrasse 8,**
**D-8505 Röthenbach/Pegnitz (DE)**

(74) Vertreter: **Matschkur, Peter Dipl.-Phys. et al, Czowalla -**
**Matschkur Patentanwälte Dr.**
**Kurt-Schumacher-Strasse 23, D-8500 Nürnberg 11 (DE)**

(54) **Vorrichtung zum Behandeln strömender Medien und Verfahren zu ihrer Herstellung.**

(57) Vorrichtung zum Behandeln strömender Medien, bestehend aus einem ggfs. keramischen Baukörper, der mit Strömungskanälen (20, 20') versehen ist, welche aus einer Mehrzahl von Einzelelementen besteht, die eine Grundplatte mit auf ihrer einen Fläche im Abstand angeordneten parallelen Rippen aufweist und die gleichsinnig in dreidimensionaler Anordnung zu einem Baukörper zusammengesetzt sind, wobei die Strömungskanäle von der Grundplatte und den Rippen benachbarter Einzelelemente gebildet sind.

EP 0 206 067 A1

0206067

Vorrichtung zum Behandeln strömender Medien und Verfahren zu ihrer Herstellung

Die Erfindung richtet sich auf eine Vorrichtung zum Behandeln strömender Medien, bestehend aus einem ggf. keramischen Baukörper, der mit Strömungskanälen versehen ist.

Um die Reinigung, Kühlung oder Erwärmung strömender Medien, wie Gase oder Flüssigkeiten, zu bewirken oder chemische Reaktionen oder katalytische Vorgänge zu bewirken, werden in der Regel Formkörper eingesetzt, die diese Ströme aufteilen, eine möglichst große Kontaktoberfläche gewährleisten und die Strömungsverhältnisse regulieren.

Eine Variante bekannter Formkörper für diesen Zweck besteht aus monolithischen Formkörpern mit wabenförmigen Strukturen und somit durchgehenden Strömungskanälen, die die Strömung aufteilen und richten. Solche Wabenkörper bestehen vielfach aus keramischen Werkstoffen, die im Extrusionsverfahren geformt, getrocknet und gebrannt werden. Trocknung und Brand solcher keramischer Formkörper sind kosten- und zeitaufwendig und - wegen der Vielzahl der Wandungen und Luftkanäle - schwierig zu beherrschen. Diese Herstellungsweise solcher Wabenkörper beschränkt die Möglichkeit der Oberflächengestaltung der Kanalwände auf Strukturen in Strangrichtung, weil nur sie durch Extrusion geformt werden können.

Deshalb ist es bei diesem Herstellungsverfahren - auch bei Formkörpern aus anderen, nichtkeramischen Werkstoffen - nicht möglich, Oberflächenstrukturen und Aussparungen quer zur Strömungsrichtung zu realisieren, obgleich diese erwünscht oder notwendig wären, um die Strömung der zu behandelnden Medien - möglichst ohne wesentliche Erhöhung des Strömungswiderstandes - turbulent zu erhalten und den Kontakt der Medien mit den Oberflächen der Strömungskanäle zu intensivieren.

In anderen Systemen kommen sogenannte Schüttkörper zum Einsatz in Form von Kugeln, Ringen und ähnlichen geometrischen Formen. Diese Schüttkörper ermöglichen einen guten Kontaktaustausch mit den zu behandelnden Medien, führen jedoch zu dem entscheidenden Nachteil, daß sie einen relativ hohen Strömungswiderstand bewirken, der kaum berechenbar und nur in engen Grenzen gezielt variierbar ist.

Bisher fehlte es jedoch an Baukörperformen, die die Vorteile beider vorbeschriebenen Ausführungsvarianten gleichermaßen in sich vereinigen: die Erzielung eines guten Kontaktaustausches zwischen den zu behandelnden Medien und dem Baukörper und die gezielte Beeinflussung des Strömungswiderstandes bzw. der Strömungsverhältnisse. Die dafür erwünschte Ausführungsform sollte darüber hinaus kostengünstig herstellbar und möglichst wartungsfreundlich und gut handhabbar sein.

Die Erfindung sieht die Lösung dieser komplexen Aufgabe bei einer Vorrichtung der eingangs bezeichneten Art in einem Baukörper, der aus einer Mehrzahl von Einzelelementen besteht, die eine Grundplatte mit auf ihrer einen Fläche in Abstand angeordneten parallelen Rippen aufweist und die gleichsinnig in dreidimensionaler Anordnung zu einem Baukörper zusammengesetzt sind, wobei die Strömungskanäle von der Grundplatte

0206067

und den Rippen benachbarter Einzelelemente gebildet sind. Die Einzelelemente solcher Baukörpersysteme müssen nicht mehr notwendigerweise im Extrusionsverfahren hergestellt werden, sondern sie können in besonders kostengünstiger Weise im Preßverfahren erzeugt werden. Bei Herstellung solcher gepreßter Formkörper aus keramischen Werkstoffen entfällt dann auch der aufwendige und schwierig zu beherrschende Trockenvorgang, und der Brennvorgang wird vereinfacht und kostengünstiger.

Derartige Einzelelemente, die in vergleichsweise kleinen geometrischen Dimensionen hergestellt werden können, lassen sich leicht in vorbestimmter geordneter Form zu einem geometrischen Körper beliebiger Größe zusammenfügen, wobei die Anzahl der nebeneinander, der übereinander und der in Strömungsrichtung hintereinander angeordneten Einzelelemente ganz auf die Erfordernisse des jeweiligen Einzelfalls abgestimmt werden kann. Die einzelnen Strömungskanäle werden zwischen den Rippen und Grundplatten der benachbarten Einzelelemente gebildet. Je mehr solcher Einzelelemente neben- und übereinander angeordnet sind, umso größer ist die Zahl der Strömungskanäle, deren Länge sich wiederum nach der Länge der Einzelelemente und der Anzahl der in Strömungsrichtung hintereinander geschalteten Elementpakete bestimmt.

Das Einzelelement kann auch aus einem katalytisch wirksamen Werkstoff bestehen. Es ist allerdings auch, wie die Erfindung in weiterer Ausgestaltung vorsieht, möglich, die Einzelelemente aus einer mechanisch festen Trägerschicht und/oder einer besonders temperatur- und/oder temperaturwechselbeständigen Trägerschicht sowie einer porösen Oberflächenschicht zu fertigen. Mehrere Schichten können in aufeinanderfolgenden Preßvorgängen erzeugt und so verdichtet und dann gemeinsam gebrannt werden. Es ist auch die Erzeugung solcher Mehrfachschichten in mehreren Arbeitsgängen und zwischengeschalteten Brennvorgängen denkbar, z.B. durch Glasuren, so daß die Stoffsysteme jedem gewünschten Anwendungsfall ohne weiteres angepaßt werden können.

Es liegt im Rahmen der Erfindung, die poröse Oberflächenschicht mit katalytisch wirksamen Stoffen zu beschichten oder zu versetzen.

Als besonders vorteilhaft hat es sich erwiesen, wenn, wie die Erfindung nach einem weiteren Merkmal vorsieht, die feste Trägerschicht eine rauhe Oberfläche aufweist. Dies begünstigt das Anhaften einer oberflächlichen Beschichtung oder aber das unmittelbare Beschichten der festen Trägerschicht mit einem Katalysatorwerkstoff od. dgl.

Die Erfindung sieht weiter vor, die Einzelelemente mit einer im Winkel zur Strömungsrichtung verlaufenden Oberflächenstruktur zu versehen. Eine solche Maßnahme fördert die Ausbildung einer turbulenten Strömung innerhalb der Kanäle, was im Hinblick auf den angestrebten Reaktionsaustausch von besonderer Bedeutung ist, um zu gewährleisten, daß das strömende Medium in möglichst innigen Kontakt mit der reaktionswirksamen Oberfläche gelangt. In weiterer Ausgestaltung dieses Gedankens kann die Oberfläche des Einzelelementes Nocken, Stege, Vertiefungen od. dgl. aufweisen. Es liegt darüber hinaus im Rahmen der Erfindung, die Grundplatte und/oder die Rippen bzw. Stege der Einzelelemente mit fensterartigen Durchbrüchen zu versehen. Sämtliche Maßnahmen dieser Art sind hervorragend geeignet, die Strömung des Mediums in jeder gewünschten Weise zu beeinflussen und dadurch die gewünschte Raktivität des Systems zu verbessern, und es wird ermöglicht, daß in einem System sowohl Längs- als auch Querströmungen betrieben werden.

Nach einem anderen Merkmal der Erfindung sind die Rippen der Grundplatte gleich hoch ausgebildet und in gleichem Abstand angeordnet, wobei die eine äußere Rippe entlang einer Längskante der Grundplatte und die andere äußere Rippe um einen Rippenabstand von der anderen Längskante angeordnet ist. Dadurch ist gewährleistet, daß sämtliche Strömungskanäle den gleichen lichten Querschnitt aufweisen und ein allseits weitgehend dichter Abschluß der Strömungskanäle erreicht wird. In gleicher Weise können die Strömungskanalquerschnitte dem erwünschten Strömungswiderstand angepaßt werden.

Die Erfindung befaßt sich darüber hinaus auch mit der Verwirklichung einer Vorrichtung aus einer Vielzahl der Einzelelemente, indem sie in weiterer Ausgestaltung vorsieht, daß in dem Baukörper Einzelelemente unterschiedlicher Form und/oder Festigkeit und/oder Oberflächengestaltung in Strömungsrichtung hintereinander und/oder nebeneinander angeordnet sind. Die Anpassungsfähigkeit eines in dieser Weise aus zahlreichen Einzelelementen ausgebildeten Reaktionssystems ist praktisch unbegrenzt. So liegt es im Rahmen dieses allgemeinen Erfindungsgedankens, daß im stromaufwärtigen Bereich an gewünschten Positionen Einzelelemente von besonders hoher Verschleißfestigkeit angeordnet sind. Es hat sich nämlich herausgestellt, daß im Einströmbereich die Medien von diesem mitgeführte abrasiv wirkende Verunreinigungen erhebliche Verschleißerscheinungen verursachen. Es ist ein besonders großer Vorteil der erfindungsgemäß aufgebauten Vorrichtung, daß Bereiche, die im Betrieb einem besonders hohen Verschleiß ausgesetzt sind, durch neue Einzelelemente ersetzt werden können, ohne daß es dazu erforderlich ist, einen ganzen Baukörper auszutauschen. Im Rahmen dieses erfindungsgemäßen Gedankens liegt es außerdem, an der Einströmseite des Baukörpers eine Einrichtung zum Ausscheiden mechanischer Verunreinigungen aus den strömenden Medien anzuordnen. Hierbei kann es sich um ein Sieb, einen Filter od. dgl. handeln, oder um eine Schicht besonders verschleißfester Einzelelementpakete in der der Erfindung zugrundeliegenden Form. Schließlich ist es besonders vorteilhaft, zwischen zwei in Strömungsrichtung aufeinanderfolgenden Einzelelementpaketen die Strömung beeinflussende Schikanen,

Leitelemente od. dgl. anzuordnen, wenn dies insbesondere zur Herbeiführung einer möglichst turbulenten Strömung erwünscht ist. Ebenfalls können Querströmungsschikanen an solchen Stellen eingebaut werden.

Zum Aufbau der gesamten Vorrichtung können nach einem Merkmal der Erfindung die dreidimensional angeordneten Einzelelemente von einem Gehäuse umschlossen sein. Dieses kann aus einem wärmebeständigen Werkstoff gefertigt sein und gewährleistet den räumlichen Zusammenhalt der mehr oder weniger zahlreichen Einzelelemente in der gewünschten Form. Eine andere Alternative sieht die Erfindung in der Weise vor, daß die dreidimensional angeordneten Einzelelemente in und/oder quer zur Strömungsrichtung von Halteelementen zusammengefaßt sind. Hierbei kann es sich um Haltebänder od. dgl. handeln.

Die Erfindung erstreckt sich nicht nur auf die geometrische Konzeption eines neuen Grundelementes und das Prinzip der modularen Aufbau- bzw. Verbindungsweise, sondern auch auf den im Preßverfahren realisierbaren Aufbau von Schichten selbst verschiedener Werkstoffe mit spezifischen Funktionen im Reaktionssystem und auf die im gleichen Herstellungsverfahren möglichen Oberflächenkonfigurationen mit erhabenen oder versenkten geometrischen Strukturen wie Rippen bzw. Mustern, die quer oder im Winkel zur Strömungsrichtung angeordnet sein können, sowie mit Fenstern bzw. Durchbrüchen in der beschriebenen Grundplatte und den Längsrippen bzw. -stegen. Dadurch können die geometrischen Oberflächen der Strömungskanäle in weiten Grenzen beliebig variiert und den Anforderungen des Anwendungsfalles angepaßt werden. Außerdem sind das Aufschäumen oder Aufsprühen raktiver Stoffe sowohl auf den un-, wie auch auf den gebrannten Einzelkörper und eventuell notwendige Nachbehandlungen leicht möglich, wie auch das Aufbringen von Glasuren. Die Modulbauweise gestattet darüber hinaus den Einbau von Einzelelementen, die

- 7 -

aus unterschiedlichen Werkstoffen bestehen oder mit verschiedenen reaktiven oder katalytischen Beschichtungen versehen sind, so daß Vorrichtungen aufgebaut werden können, die sich mit wabenförmigen monolithischen Geometrien in dieser Variationsbreite nicht in dieser Weise realisieren lassen würden.

Eine derartige Erweiterung und Abwandlung des erfindungsgemäßen Prinzips, insbesondere im Hinblick auf eine verbesserte Beeinflussung und Beherrschung der Strömungsverhältnisse, ergibt sich in weiterer Ausgestaltung der Erfindung dadurch, daß die Längsachsen der Rippen über die Länge der Einzelelemente gleiche Abstände voneinander aufweisen und daß die Außenflächen der Rippen zumindest teilweise gegenüber der gemittelten Längsachse geneigt verlaufen. Unter gemittelter Längsachse versteht man dabei die Haupterstreckungsrichtung der Rippen, die ja keine eigentliche Längsachse aufweisen, sofern sie nicht durchgehend gerade ausgebildet sind.

In einer ersten Ausführungsform kann vorgesehen sein, daß die Rippen gewellt ausgebildet sind, wobei zur Aufrechterhaltung des jeweils gleichen Abstandes zwischen den Mittelachsen der Rippen die Wellung aller zueinander in Abstand verlaufenden Rippen gleichförmig ausschwenkt.

Eine zweite besonders vorteilhafte Ausführungsform, mit Hilfe derer die Strömungsverhältnisse weiter beeinflußt werden können, ergibt sich dadurch, daß die Rippen mit zueinander parallel verlaufenden Längsmittelachsen eine sich in Längsrichtung ändernde Dicke aufweisen. Die Dickenänderung kann dabei stufenweise erfolgen, beispielsweise daß ausgehend von einer größeren Dicke am Einlauf ein einmaliger oder mehrfacher abgestufter Dickensprung erfolgt. Statt dessen kann die Dicke aber auch kontinuierlich von einem Ende zum anderen abnehmen.

0206067

- 8 -

Selbstverständlich können auch bei der erfindungsgemäßen Vorrichtung weitere Variationen vorgesehen sein, insbesondere eine katalytisch wirkende Oberflächenbeschichtung der Elemente sowie entsprechende weitere Profilierungen oder sonstige Ausgestaltungen der Oberflächen.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:

Fig. 1 ein Einzelelement für den Baukörper der Vorrichtung in Draufsicht sowie

Fig. 2 in Stirnansicht;

Fig. 3 einen Schnitt etwa nach Linie III-III in Fig. 1 sowie

Fig. 4 einen entsprechenden Schnitt durch eine andere Ausführungsform;

Fig. 5 eine abgewandelte Ausführungsform in einer der Fig. 1 entsprechenden Draufsicht;

Fig. 6 eine weitere Abwandlung sowie

Fig. 7 noch eine andere Ausführungsform, jeweils in Draufsicht entsprechend Fig. 1;

Fig. 8 eine andere Ausführungsform in Draufsicht sowie

Fig. 9 eine weitere Abwandlung;

Fig. 10 den Aufbau der Vorrichtung aus Einzelelementen innerhalb eines Gehäuses,

Fig. 11 ein mit den Einzelelementen fertig beschicktes Gehäuse in perspektivischer Darstellung,

Fig. 12 den Aufbau der Vorrichtung aus Einzelelementen innerhalb eines Gehäuses,

Fig. 13 ein mit den Einzelelementen fertig beschicktes Gehäuse in perspektivischer Darstellung,

Fig. 14
bis 18 Draufsichten auf drei unterschiedliche Ausführungsformen der Einzelelemente für den Baukörper der Vorrichtung mit erfindungsgemäß ausgestalteten Rippen.

Das Einzelelement 1 ist vergleichsweise dünnwandig ausgebildet, und zwar kann die Wanddicke bis an die untere Grenze der gewünschten mechanischen Festigkeit gehen. Das Einzelelement 1 besteht aus einer ebenen Grundplatte 2 mit der Länge x und der Breite y. Auf der Fläche 3 dieser Grundplatte 2 sind bei der beispielsweise wiedergegebenen Ausführungsform vier parallel zueinander angeordnete Rippen 5 vorgesehen, die die gleiche Höhe z gegenüber der unteren Fläche 6 der Grundplatte 2 aufweisen. Die eine äußere Rippe 5' verläuft entlang der seitlichen Längskante 7 der Grundplatte 2, die andere äußere Rippe 5" verläuft in einem Abstand w von der anderen Längskante 8 der Grundplatte 2. Dieses Maß w entspricht den jeweiligen Abständen zwischen zwei Rippen 5. Die Zeichnung läßt erkennen, daß $z \approx w$ und $x = 2y$ und $z \approx 1/5y$.

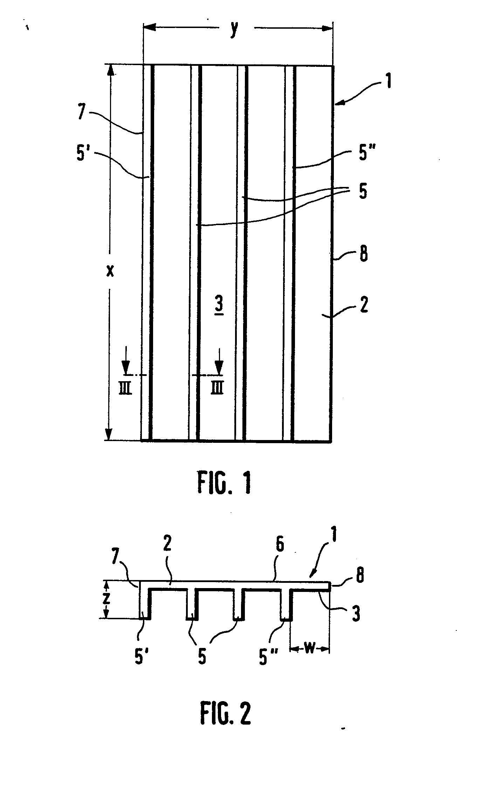

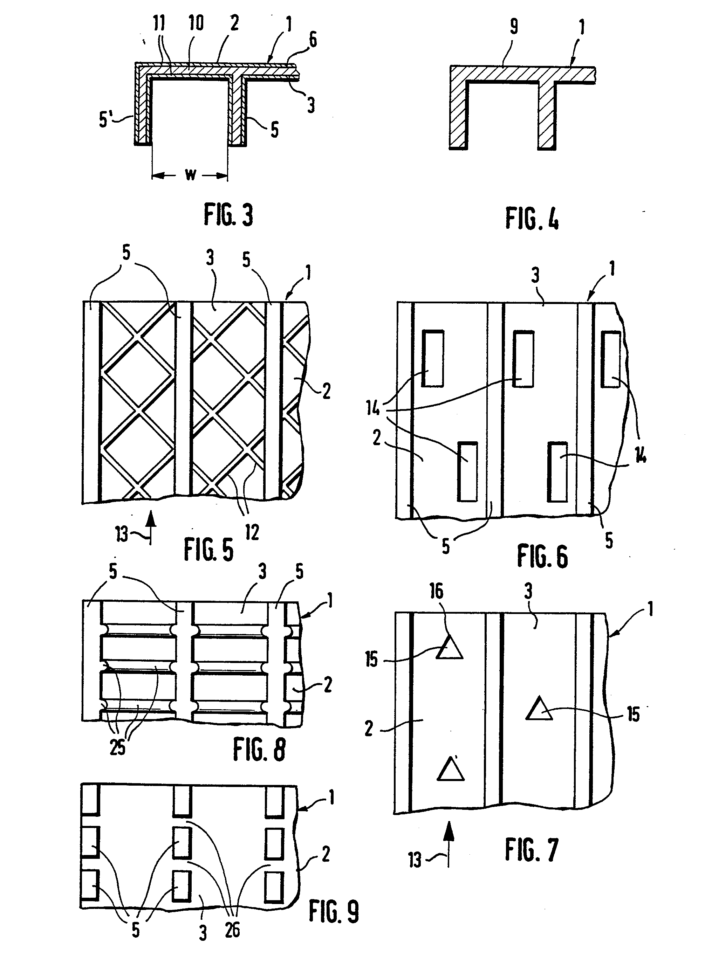

Der Grundkörper 1 kann, wie Fig. 1 erkennen läßt, aus einer einzigen Trägerschicht 9 bestehen, die ggf. aus einem selbst katalytisch wirksamen Werkstoff besteht. Die Ausführungsform nach Fig. 3 besteht aus einer festen inneren Trägerschicht 10 und einer porösen Oberflächenschicht 11, die sich sowohl auf der Fläche 3, als auch der unteren Fläche 6, als auch an den Rippen 5 des Einzelelements 1 befindet. Ggf. kann diese poröse Oberflächenschicht sich auch lediglich an den Rippen 5 oder lediglich an der Grundplatte 2 befinden.

Die Grundplatte 2 weist bei der Ausführungsform nach Fig. 5 eine oberflächliche Struktur von sich kreuzenden Rippen 12 auf, die im Winkel zur Strömungsrichtung 13 des zu behandelnden Mediums verlaufen. Bei der Ausführungsform nach Fig. 6 sind in der Grundplatte 2 fensterartige Durchbrüche 14 angeordnet, die einen rechteckigen Querschnitt aufweisen. Die bei der Ausführungsform nach Fig. 7 verwendeten Öffnungen 15 sind von dreieckigem Querschnitt, wobei die Spitze 16 des Öffnungsquerschnitts in Strömungsrichtung 13 weist. Für diese Durchbrüche 14 sind die beliebigsten Querschnitte und Größen denkbar. Fig. 6 läßt erkennen, daß die fensterartigen Durchbrüche 14 in Längsrichtung, die der Strömungsrichtung 13 entspricht, seitlich versetzt angeordnet sind. Bei der Ausführungsform nach Fig. 7 folgt eine Versetzung der fensterartigen Durchbrüche 15 in den nebeneinander angeordneten Strömungskanälen.

Bei der in Fig. 8 wiedergegebenen Ausführungsform sind in dem Zwischenraum zwischen je zwei Rippen 5 quer zur Strömungsrichtung 13 verlaufende Querrippen 25 angeordnet, die sich sowohl auf der Fläche 3 der Grundplatte, als auch an den Seitenwänden der Rippen 5 erstrecken. Die Ausführungsform nach Fig. 9 zeichnet sich durch in den Rippen 5 angeordnete fensterartige Unterbrechungen 26 aus.

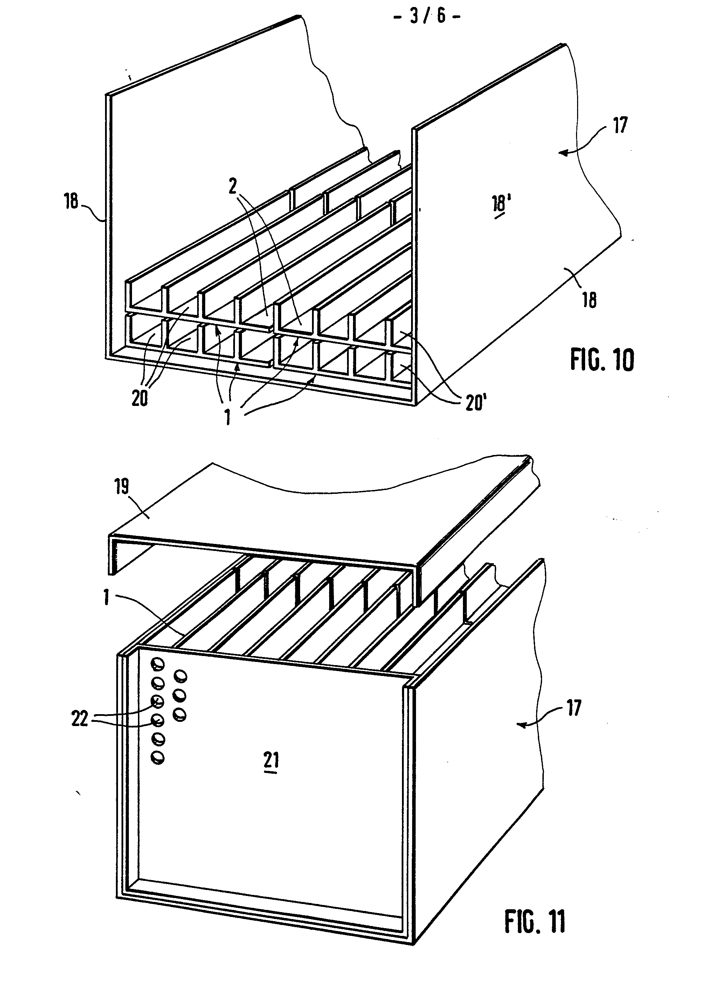

Die Fig. 10 und 11 geben lediglich ein Beispiel eines aus einer Vielzahl von Einzelelementen 1 zu gestaltenden Baukörpers wieder und zwar bei dieser Ausführungsform innerhalb eines Gehäuses 17 aus einem z.B. wärmebeständigen Werkstoff. Die lichten Innenmaße dieses Gehäuses 17 entsprechen dem Rastermaß der Einzelelemente 1. Das Gehäuse 17 ist, wie die Fig. 10 und 11 erkennen lassen, nach oben offen und wird durch einen die beiden Seitenwände 18 übergreifenden Deckel 19 verschlossen. Die eine Seitenwand 18' des Gehäuses 17 verschließt die jeweils äußeren Strömungskanäle 20' aus den Einzelelementen 1 seitlich. Die Grundplatte 2 eines jeden Einzelelements 1 des Modulsystems dient der Vervollständigung der entsprechenden Strömungskanäle 20 der jeweils darunter befindlichen Einzelelemente 1. Die Strömungskanäle 20 zwischen den Rippen 5 der im Stapel zu oberst liegenden Einzelelemente 1 werden durch den Deckel 19 verschlossen. Die Grundplatte 2 eines jeden übergeordneten Einzelelements 1 verschließt die Strömungskanäle 20 jedes darunter befindlichen Einzelelements 1.

Die Stirnseite des Gehäuses 17 ist, wie Fig. 11 zeigt, von der Platte 21 verschlossen, die mit einer Perforierung 22 über ihre gesamte Fläche versehen ist. Durch diese tritt das zu behandelnde Medium an der Eintrittsseite in das Gehäuse 17 ein und an der gegenüberliegenden (nicht dargestellten) Seite wieder aus. Die Gehäuseaußenwände könnten auch aus einem Drahtnetz bestehen oder aus z.B. keramischen Lochplatten o.ä. Formteilen bzw. Materialien.

0206067

Die erfindungsgemäße Ausbildung der Vorrichtung aus einer Vielzahl von Einzelelementen kommt u.a. in Betracht für die Kühlung, Erwärmung und/oder Reinigung von Gasen und Flüssigkeiten, z.B. in Reaktionsanlagen und für Katalysatoranlagen.

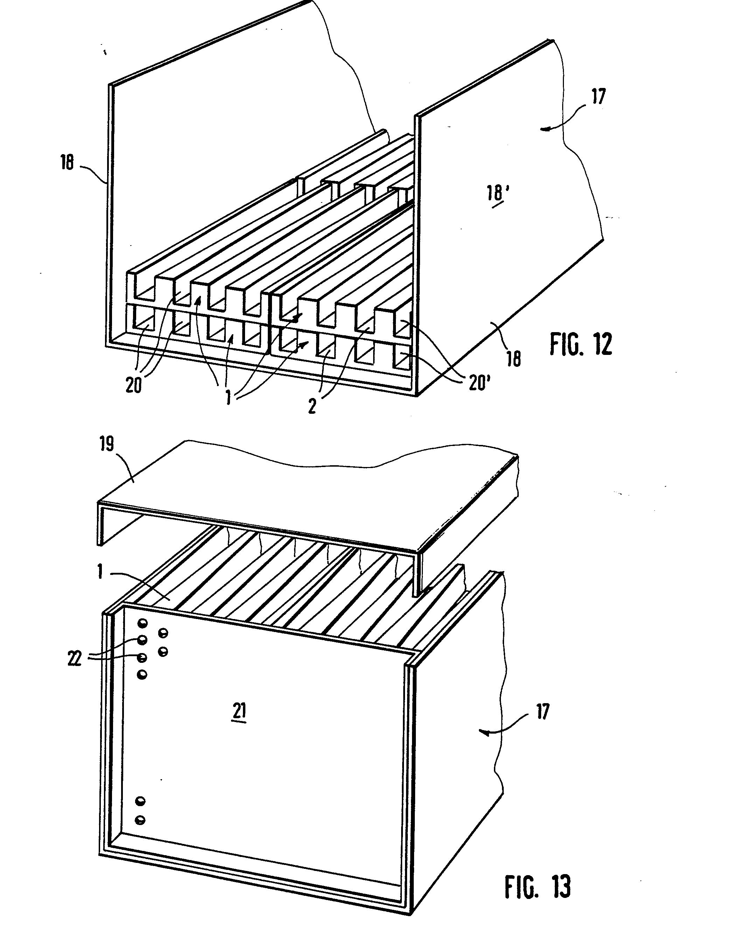

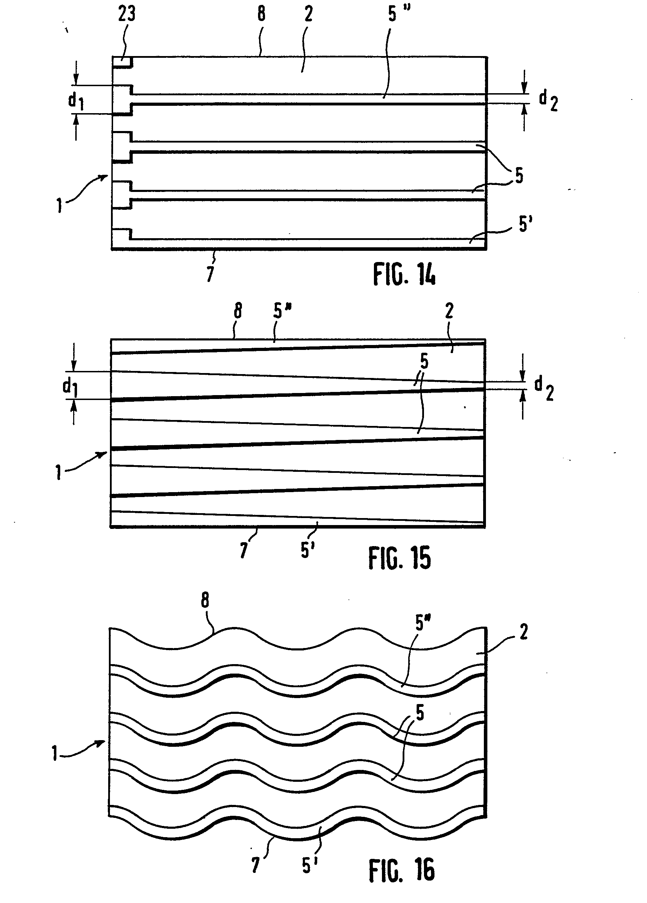

Die Figuren 12 und 13 geben lediglich ein weiteres Beispiel eines aus einer Vielzahl von Einzelelementen 1 zu gestaltenden Baukörpers wieder, und zwar bei dieser Ausführungsform innerhalb eines Gehäuses 17 aus einem z.B. wärmebeständigen Werkstoff. Die lichten Innenmaße dieses Gehäuses 17 entsprechen dem Rastermaß der Einzelelemente 1. Das Gehäuse 17 ist, wie die Figuren 12 und 13 erkennen lassen, nach oben offen und wird durch einen die beiden Seitenwände 18 übergreifenden Deckel 19 verschlossen. Die eine Seitenwand 18' des Gehäuses 17 verschließt die jeweils äußeren Strömungskanäle 20' aus den Einzelelementen 1 seitlich. Die Grundplatte 2 eines jeden Einzelelements 1 des Modulsystems dient der Vervollständigung der entsprechenden Strömungskanäle 20 der jeweils darunter befindlichen Einzelelemente 1. Die Strömungskanäle 20 zwischen den Rippen 5 der im Stapel zu oberst liegenden Einzelelemente 1 werden durch den Deckel 19 verschlossen. Die Grundplatte 2 eines jeden übergeordneten Einzelelements 1 verschließt die Strömungskanäle 20 jedes darunter befindlichen Einzelelements 1.

Die Stirnseite des Gehäuses 17 ist, wie Fig. 13 zeigt, von der Platte 21 verschlossen, die mit einer Perforierung 22 über ihre gesamte Fläche versehen ist. Durch diese tritt das zu behandelnde Medium an der Eintrittsseite in das Gehäuse 17 ein und an der gegenüberliegenden (nicht dargestellten) Seite wieder aus. Die Gehäuseaußenwände könnten auch aus einem Drahtnetz bestehen oder aus z.B. keramischen Lochplatten oder ähnlichen Formteilen bzw. Materialien.

Die Einzelelemente 1 sind vergleichsweise dünnwandig ausgebildet, und zwar kann die Wandstärke bis an die untere Grenze der gewünschten mechanischen Festigkeit gehen. Das Einzelelement 1 besteht aus einer ebenen Grundplatte 2, auf der in den dargestellten Ausführungsbeispielen jeweils vier Rippen 5 vorgesehen sind, die alle die gleiche Höhe gegenüber der unteren Fläche der Grundplatte 2 aufweisen. Die eine äußere Rippe 5' verläuft entlang der seitlichen Längskante 7 der Grundplatte 2, die andere äußere Rippe 5" verläuft bei den Ausführungsformen nach Figuren 14 und 16 in einem Abstand von der anderen Längskante 8 der Grundplatte. Dieser Abstand entspricht den jeweiligen Abständen zwischen zwei Rippen 5.

Bei der Ausführungsform nach Fig. 14 sind die Längsmittelachsen aller Rippen 5, 5', 5" parallel zueinander angeordnet. Die Dicken der Rippen ändern sich allerdings von einem Wert $d_1$ an der Eingangsseite auf einen Wert $d_2$ auf der Ausgangsseite, wobei die Dickenänderung sprungartig erfolgt. Um einen nahtlosen Anschluß beim Nebeneinanderordnen solcher Einzelelemente 1 zu erreichen, ist ein Einzelklötzchen 23 an der Kante 8 angeformt, dessen Dicke quer zur Längsrichtung $(d_1 - d_2)/2$ beträgt.

Bei der Ausführungsform nach Fig. 15 ändert sich die Dicke der Rippen vom Eingangswert $d_1$ zum Ausgangswert $d_2$ kontinuierlich, was zur Folge hat, daß man die Rippe 5" nicht im Abstand vom Rand 8, sondern längs dieses Außenrandes 8 anordnet. Die Außenrippen 5' und 5" stellen jeweils die Hälfte einer Rippe 5 dar und ergänzen sich bei der Nebeneinanderordnung zu einer vollständigen Rippe.

Bei der Ausführungsform nach Fig. 16 wiederum ist die Grundform der Platte kein richtiges Rechteck mehr, da die Längskanten 7 und 8 ebenso gewellt sind wie die Rippen 5, 5' und 5".

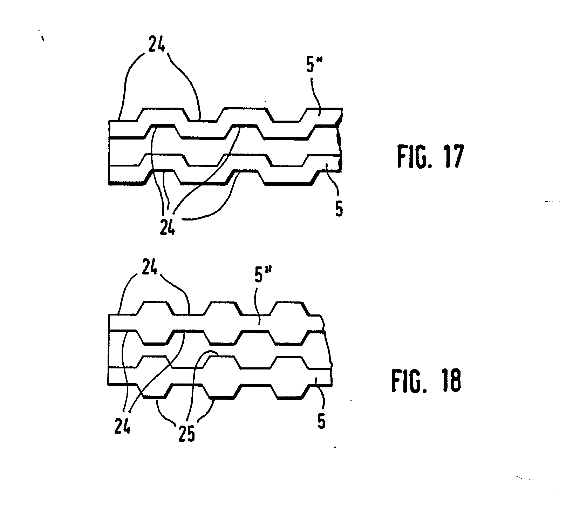

Die Figur 17 zeigt eine Ausführungsform, bei der die Rippen 5, 5' und 5" mäanderförmig gewellt sind oder anders ausgedrückt, bei denen die Rippen mit senkrecht zu ihrer Längsrichtung verlaufenden, auf beiden Seiten jeweils auf Lücke versetzt angeordneten, Quernuten versehen sind. Bei der Anordnung nach Fig. 18 sind die Rippen 5, 5' und 5" mit beidseits an der gleichen Stelle angeordneten Rippen 24 versehen bzw., wenn man davon ausgeht, daß die normalen Rippen der dünneren Zwischenstegstruktur entsprechen, weisen sie jeweils beidseits angeordnete Querrippen 25 auf.

0206067

Patentansprüche

1. Vorrichtung zum Behandeln strömender Medien, bestehend aus einem ggfs. keramischen Baukörper, der mit Strömungskanälen versehen ist, dadurch gekennzeichnet, daß sie aus einer Mehrzahl von Einzelelementen (1) besteht, die eine Grundplatte (2) mit auf ihrer einen Fläche im Abstand w angeordneten parallelen Rippen (5) aufweist und die gleichsinnig in dreidimensionaler Anordnung zu einem Baukörper zusammengesetzt sind, wobei die Strömungskanäle (20) von der Grundplatte (2) und den Rippen (5) benachbarter Einzelelemente (1) gebildet sind.

2. Vorrichtung nach Anspruch 1, dadurch gekennzeichnet, daß das Einzelelement (1) aus einem katalytisch wirksamen Werkstoff besteht.

3. Vorrichtung nach Anspruch 1, dadurch gekennzeichnet, daß das Einzelelement (1) aus einem nicht-keramischen Werkstoff besteht.

4. Vorrichtung nach Anspruch 1, dadurch gekennzeichnet, daß das Einzelelement (1) aus einer festen Trägerschicht (10) und/oder einer porösen Oberflächenschicht (11) besteht.

5. Vorrichtung nach Anspruch 4, dadurch gekennzeichnet, daß die poröse Oberflächenschicht (11) mit katalytisch wirksamen Stoffen beschichtet oder versetzt ist.

6. Vorrichtung nach einem der Ansprüche 1 bis 5, dadurch gekennzeichnet, daß die feste Trägerschicht (9, 10) eine rauhe Oberfläche aufweist.

7. Vorrichtung nach einem der Ansprüche 1 bis 6, dadurch gekennzeichnet, daß das Einzelelement (1) eine im Winkel zur Strömungsrichtung (13) verlaufende Oberflächenstruktur aufweist (Fig. 5).

8. Vorrichtung nach einem der Ansprüche 1 bis 7, dadurch gekennzeichnet, daß die Oberfläche des Einzelelements (1) Nocken, Stege, Vertiefungen od.dgl. aufweist.

9. Vorrichtung nach einem der Ansprüche 1 bis 8, dadurch gekennzeichnet, daß die Grundplatte (2) und/oder die Rippen (5) fensterartige Durchbrüche oder Aussparungen (14, 15, 26) aufweisen.

10. Vorrichtung nach einem der Ansprüche 1 bis 9, dadurch gekennzeichnet, daß die Rippen (5) der Grundplatte (2) gleich hoch ausgebildet und in gleichem Abstand w angeordnet sind, wobei die eine äußere Rippe (5') entlang einer Längskante (7) der Grundplatte (2) und die andere äußere Rippe (5") um einen Rippenabstand w von der anderen Längskante (8) angeordnet ist.

11. Vorrichtung nach einem der Ansprüche 1 bis 10, dadurch gekennzeichnet, daß in dem Baukörper Einzelelemente (1) unterschiedlicher Form und/oder Festigkeit und/oder Temperatur- oder Temperaturwechselbeständigkeit und/oder Oberflächengestaltung und/oder aus unterschiedlichen Werkstoffen in Strömungsrichtung (13) hintereinander angeordnet sind.

12. Vorrichtung nach Anspruch 11, dadurch gekennzeichnet, daß im stromaufwärtigen Bereich Einzelelemente (1) von besonders hoher Verschleißfestigkeit angeordnet sind.

13. Vorrichtung nach einem der Ansprüche 1 bis 12, dadurch gekennzeichnet, daß an der Einströmseite des Baukörpers eine Einrichtung zum Ausscheiden mechanischer Verunreinigungen aus dem strömenden Medium angeordnet ist.

14. Vorrichtung nach einem der Ansprüche 1 bis 10, dadurch gekennzeichnet, daß zwischen zwei in Strömungsrichtung (13) aufeinanderfolgenden Einzelelementen (1) die Strömung beeinflussende Schikanen, Leitelemente od.dgl. angeordnet sind.

15. Vorrichtung nach einem der Ansprüche 1 bis 14, dadurch gekennzeichnet, daß die dreidimensional angeordneten Einzelelemente (1) von einem Gehäuse (17) umschlossen sind.

16. Vorrichtung nach einem der Ansprüche 1 bis 14, dadurch gekennzeichnet, daß die dreidimensional angeordneten Einzelelemente (1) in und/oder quer zur Strömungsrichtung (139 von Halteelementen zusammengefaßt sind.

17. Verfahren zum Herstellen der Einzelelemente (1) der Vorrichtung nach einem oder mehreren der Ansprüche 1 bis 16, dadurch gekennzeichnet, daß sie quer zur Strömungsrichtung (13) im Preßverfahren hergestellt werden.

18. Verfahren nach Anspruch 17, dadurch gekennzeichnet, daß auf eine feste Trägerschicht (10) eine oder mehrere poröse Oberflächenschichten (11) aufgepreßt oder aufgebracht werden.

19. Verfahren nach Anspruch 17, dadurch gekennzeichnet, daß auf eine feste Trägerschicht (10) eine oder mehrere poröse Oberflächenschichten (11) aufgeschlämmt oder aufgesprüht oder Glasuren aufgebracht werden.

20. Vorrichtung nach einem der Ansprüche 1 bis 9, 11 bis 19, dadurch gekennzeichnet, daß die Längsmittelachsen der Rippen (5, 5', 5") über die Länge der Einzelelemente gleiche Abstände voneinander aufweisen und daß die Außenflächen der Rippen zumindest teilweise gegenüber der gemittelten Längsachse geneigt verlaufen.

21. Vorrichtung nach Anspruch 20, dadurch gekennzeichnet, daß die Rippen (5, 5', 5") gewellt ausgebildet sind.

- 4 -

22. Vorrichtung nach Anspruch 20, dadurch gekennzeichnet, daß die Rippen (5, 5', 5") mit zueinander parallel verlaufenden Längsmittelachsen eine sich in Längsrichtung ändernde Dicke aufweisen.

23. Vorrichtung nach Anspruch 22, dadurch gekennzeichnet, daß sich die Dicke stufenweise ändert.

24. Vorrichtung nach Anspruch 22, dadurch gekennzeichnet, daß die Dicke kontinuierlich von einem Ende zum anderen abnimmt.

25. Vorrichtung nach Anspruch 22 oder 23, dadurch gekennzeichnet, daß die Rippen (5, 5', 5") mit senkrecht zu ihrer Längsrichtung - vorzugsweise beidseits angeordneten - Querrippen (25) oder -nuten (24) versehen sind.

FIG. 1

FIG. 2

0206067

FIG. 3

FIG. 4

FIG. 5

FIG. 6

FIG. 8

FIG. 7

FIG. 9

0206067

- 3 / 6 -

FIG. 10

FIG. 11

FIG. 12

FIG. 13

0206067

-5/6-

FIG. 14

FIG. 15

FIG. 16

24

5"

FIG. 17

5

24

24

5"

FIG. 18

24

25

5

**Europäisches Patentamt**

# EUROPÄISCHER RECHERCHENBERICHT

Nummer der Anmeldung

EP 86 10 7810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US-A-4 028 275 (T. SAKAI)<br><br>* Figuren 1,3,4 *<br>--- | | B 01 J 35/02 |
| A | US-A-3 910 850 (G.J. TURNER)<br><br>* Figuren 13,14; Spalte 4, Zeile 53 - Spalte 5, Zeile 17 *<br>--- | | |
| A | DE-A-2 934 973 (G.T.E. SYLVANIA)<br>* Seite 12, Zeile 6 - Ende Seite 13; Figur 1 *<br>--- | | |
| A | DE-A-2 529 358 (ADVANCED MATERIALS ENGINEERING)<br>* Figuren 1,2 *<br>--- | | RECHERCHIERTE SACHGEBIETE (Int. Cl.4) |
| A | EP-A-0 097 726 (ROCKWELL)<br><br>-----| | B 01 J 35/00<br>F 28 F |

Der vorliegende Recherchenbericht wurde für alle Patentansprüche erstellt.

| Recherchenort | Abschlußdatum der Recherche | Prüfer |
|---|---|---|
| DEN HAAG | 24-09-1986 | DEVISME F.R. |